# EUROPEAN PATENT APPLICATION

(11) **EP 2 239 159 A1**
(43) Date of publication of application: **13.10.2010**
(21) Application number: 10158676.6
(22) Date of filing: 31.03.2010
(51) Int. Cl.: B60H 1/00, F28D 20/02

(54) **Thermal storage unit and vehicle air conditioner**

(30) Priority: 09.04.2009 JP 2009094736
(71) Applicant: Kabushiki Kaisha Toyota Jidoshokki, Kariya-shi, Aichi 448-8671 (JP)
(72) Inventor: Murakami, Kazuo, Kariya-shi Aichi 448-8671 (JP); Yokomachi, Naoya, Kariya-shi Aichi 448-8671 (JP); Akiyama, Hirokuni, Kariya-shi Aichi 448-8671 (JP)
(74) Representative: TBK-Patent

(57) **Abstract**

A thermal storage unit (2) includes a thermal storage, a heat exchange path, a housing (11) and a reservoir (14). The thermal storage is filled with a thermal storage medium (15). A heat exchange medium flows through the heat exchange path (16). The housing surrounds and thermally insulates the thermal storage from the outside. The housing has an inlet port and an outlet port for communicating with the heat exchange path and a conduit (2B) which is located (21) outside the housing and connected to the inlet port and the outlet port. The reservoir (14) is located in the housing for reserving the heat exchange medium. When the thermal storage unit is not in use, the reservoir collects the heat exchange medium flowing by weight thereof through the inlet port and the outlet port, thereby allowing air to be present at the inlet port (2B) and the outlet port (2A).

## Description

### BACKGROUND OF THE INVENTION

The present invention relates to a thermal storage unit and a vehicle air conditioner.

Japanese Unexamined Patent Application Publication No. 6-99724 discloses a vehicle air conditioner including a thermal storage unit and a blower. The thermal storage unit has a thermal storage medium such as paraffin that can store heat in a negative or positive energy state. The thermal storage unit has therein a heat source that can supply heat to the thermal storage medium. Means for supplying energy is provided inside and outside the vehicle and connected to the heat source for supplying heat in a negative or positive energy state to the heat source. The blower is provided near the thermal storage unit for supplying air around the thermal storage unit into the interior of the vehicle.

When the thermal storage medium stores heat in a negative energy state in the vehicle air conditioner, the vehicle interior may be cooled by operating the blower when the vehicle is in use. When the thermal storage medium stores heat in a positive energy state, the vehicle interior may be heated by operating the blower when the vehicle is in use.

When the vehicle is to be used after the above-described vehicle air conditioner is left unused for a long time, however, it is hard to cool or heat the vehicle interior for a long time. That is, when the thermal storage unit is left unused for a long time, heat stored in a negative energy state in the thermal storage medium tends to absorb heat, so that the thermal storage unit cannot perform long-time cooling in the subsequent use. Similarly, when the thermal storage unit is left unused for a long time, heat stored in a positive energy state in the thermal storage medium tends to release heat, so that the thermal storage unit cannot perform long-time heating in the subsequent use.

To enable such long-time cooling or long-time heating of the air conditioner, the thermal storage medium may be cooled or heated while the air conditioner is left unused for a long time. In this case, it is necessary to park the vehicle at a place where the thermal storage medium may be cooled or heated. Such parking is not necessarily practicable.

Alternatively, the thermal storage medium may be surrounded and thermally insulated from the outside by a housing of the thermal storage unit. According to the inventors, however, such thermal insulation cannot fully solve the above problems.

According to the inventors, absorption of heat and heat release of the thermal storage medium tend to take place via the heat exchanger medium such as water which is present in the heat exchange path. Especially, in the case wherein the housing surrounds and thermally insulates the thermal storage from the outside and has an outlet port and an inlet port that extend out of the housing and communicate with the heat exchange path, the outlet port and the inlet port are directly exposed to the outside of the housing. Therefore, the heat exchanger medium at the outlet port and the inlet port tends to absorb or release heat.

The present invention is directed to a thermal storage unit and a vehicle air conditioner that can perform long-time cooling and heating even after the thermal storage unit and the vehicle air conditioner are left unused for a long time.

### SUMMARY OF THE INVENTION

In accordance with an aspect of the present invention, a thermal storage unit includes a thermal storage, a heat exchange path, a housing and a reservoir. The thermal storage is filled with a thermal storage medium. A heat exchange medium flows through the heat exchange path for exchanging heat between the thermal storage medium of the thermal storage and the heat exchange medium. The housing surrounds and thermally insulates the thermal storage from the outside. The housing has an inlet port and an outlet port for communicating with the heat exchange path and a conduit which is located outside the housing and connected to the inlet port and the outlet port. The inlet port and the outlet port allow the heat exchange medium to flow into and out of the housing, respectively. The reservoir is located in the housing for reserving the heat exchange medium. When the thermal storage unit is not in use, the reservoir collects the heat exchange medium flowing by weight thereof through the inlet port and the outlet port, thereby allowing air to be present at the inlet port and the outlet port.

In accordance with another aspect of the present invention, an air conditioner for a vehicle includes a thermal storage unit and a heat exchanger. The thermal storage unit includes a thermal storage, a heat exchange path, a housing and a reservoir. The thermal storage is filled with a thermal storage medium. A heat exchange medium flows through the heat exchange path for exchanging heat between the thermal storage medium of the thermal storage and the heat exchange medium. The housing surrounds and thermally insulates the thermal storage from the outside. The housing has an inlet port and an outlet port for communicating with the heat exchange path and a conduit which is located outside the housing and connected to the inlet port and the outlet port. The inlet port and the outlet port allow the heat exchange medium to flow into and out of the housing, respectively. The reservoir is located in the housing for reserving the heat exchange medium. When the thermal storage unit is not in use, the reservoir collects the heat exchange medium flowing by weight thereof through the inlet port and the outlet port, thereby allowing air to be present at the inlet port and the outlet port. The heat exchanger is mounted to the conduit. Air around the heat exchanger is supplied into interior of the vehicle.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing a vehicle air conditioner according to a first embodiment of the present invention, showing a state wherein the vehicle air conditioner is not in use;
Fig. 2 is a schematic view showing the vehicle air conditioner according to the first embodiment of the present invention, showing a state wherein the vehicle air conditioner is in use;
Fig. 3 is a schematic cross sectional view showing a thermal storage unit of the vehicle air conditioner of Fig. 1, showing a state wherein the vehicle air conditioner is not in use;
Fig. 4 is a schematic cross sectional view showing the thermal storage unit of the vehicle air conditioner of Fig. 1, showing a state wherein use of the vehicle air conditioner is at an early stage or has been just finished;
Fig. 5 is a schematic cross sectional view showing the thermal storage unit of the vehicle air conditioner of Fig. 1, showing a state wherein the vehicle air conditioner is in use;
Fig. 6 is a schematic cross sectional view showing a thermal storage unit of a vehicle air conditioner according to a second embodiment of the present invention, showing a state wherein the vehicle air conditioner is not in use;
Fig. 7 is a schematic cross sectional view showing the thermal storage unit of the vehicle air conditioner according to the second embodiment, showing a state wherein the vehicle air conditioner is in use;
Fig. 8 is a schematic cross sectional view showing a thermal storage unit of a vehicle air conditioner according to a third embodiment of the present invention, showing a state wherein the vehicle air conditioner is not in use;
Fig. 9 is a schematic cross sectional view showing the thermal storage unit of the vehicle air conditioner according to the third embodiment, showing a state wherein the vehicle air conditioner is in use;
Fig. 10 is a schematic cross sectional view showing a thermal storage unit of a vehicle air conditioner according to a fourth embodiment of the present invention, showing a state wherein thermal storage or cooling storage is performed when the vehicle air conditioner is not in use;
Fig. 11 is a schematic cross sectional view showing the thermal storage unit of the vehicle air conditioner according to the fourth embodiment, showing a state wherein the vehicle air conditioner is in use; and
Fig. 12 is a schematic cross sectional view showing the thermal storage unit of the vehicle air conditioner according to the fourth embodiment, showing a state wherein the vehicle air conditioner is not in use.

### DETAILED DESCRIPTION OF THE PREFERRED EMBODIMENTS

The following will describe the embodiments of the present invention with reference to the accompanying drawings.

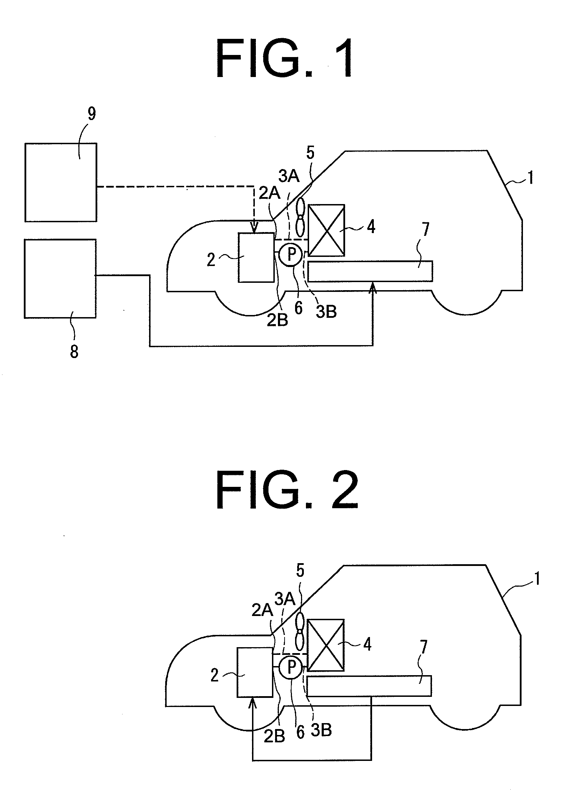

Figs. 1 and 2 show a vehicle 1 in which the vehicle air conditioner of the first embodiment is mounted. The vehicle air conditioner includes a thermal storage unit 2 having an outlet port 2A and an inlet port 2B, a heat exchanger 4, a conduit 3A connecting the outlet port 2A of the thermal storage unit 2 and the heat exchanger 4, a conduit 3B connecting the inlet port 2B of the thermal storage unit 2 and the heat exchanger 4, a blower 5 that supplies air around the heat exchanger 4 into the interior of the vehicle 1. The vehicle 1 includes a hybrid vehicle and an electric car.

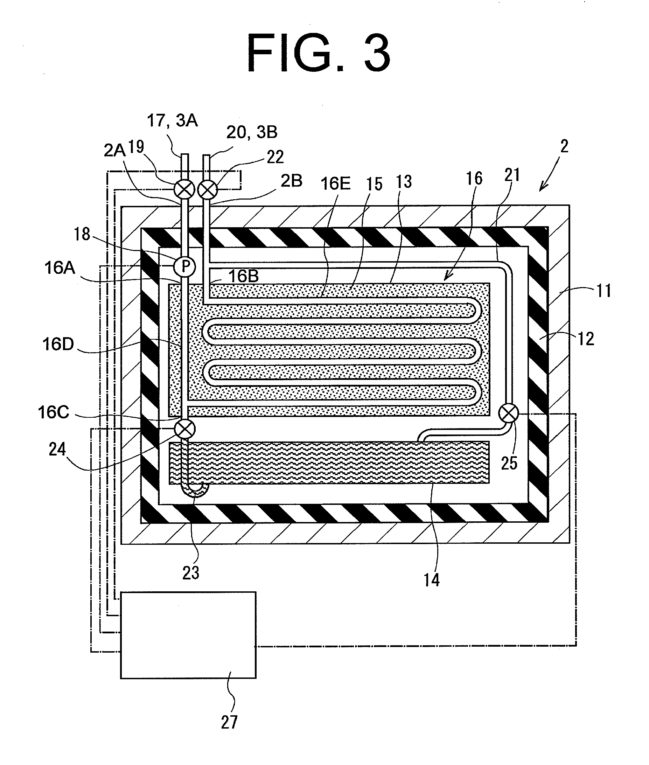

Referring to Fig. 3, the thermal storage unit 2 includes a housing 11 through which the outlet port 2A and the inlet port 2B are formed and extend out of the housing 11. A vacuum insulator 12 is coated on the interior surface of the housing 11. A thermal storage tank 13 and a reservoir tank 14 are provided within the vacuum insulator 12. The thermal storage tank 13 is located above the reservoir tank 14.

The thermal storage tank 13 is filled with a thermal storage medium 15 and serves as a thermal storage. A heat exchanger pipe 16 defining a heat exchange path is provided in the thermal storage tank 13. The reservoir tank 14 and the heat exchanger pipe 16 are filled with water and air. Water serves as a heat exchanger medium. The reservoir tank 14 serves as a reservoir.

The heat exchanger pipe 16 has an outlet port 16A and an inlet port 16B that are opened at the top of the thermal storage tank 13, and a communication port 16C that is opened at the bottom of the thermal storage tank 13. The heat exchanger pipe 16 further has a first pipe portion 16D and a second pipe portion 16E. The first pipe portion 16D extends vertically and connects the outlet port 16A and the communication port 16C. The second pipe portion 16E is connected at one end thereof to the inlet port 16B and at the other end thereof to the first pipe portion 16D above the communication port 16C. As shown in Fig. 3, the second pipe portion 16E is provided in a serpentine form having numerous turns in alternate directions in the thermal storage tank 13.

An outlet pipe 17 extends vertically from the outlet port 16A of the heat exchanger pipe 16 to the outlet port 2A of the housing 11 through the vacuum insulator 12. A pump 18 is connected in the outlet pipe 17 within the vacuum insulator 12. The outlet pipe 17 is connected to the conduit 3A shown in Figs. 1 and 2. A first valve 19 is connected in the conduit 3A at a position outside the housing 11.

An inlet pipe 20 extends vertically from the inlet port 16B of the heat exchanger pipe 16 to the inlet port 2B of the housing 11 through the vacuum insulator 12. An inlet communication pipe 21 is branched from the inlet pipe 20 at a position within the vacuum insulator 12 and connected to the reservoir tank 14 at the top thereof. The inlet pipe 20 is connected to the conduit 3B shown in Figs. 1 and 2. A second valve 22 is connected in the conduit 3B at a position outside the housing 11. As shown in Figs. 1 and 2, a pump 6 is connected in the conduit 3B.

As shown in Fig. 3, an outlet communication pipe 23 is connected between the communication port 16C of the heat exchanger pipe 16 and the bottom of the reservoir tank 14. A main valve 24 is connected in the outlet communication pipe 23. An auxiliary valve 25 is connected in the inlet communication pipe 21.

The pumps 6 (refer to Figs. 1 and 2) and 18, the main valve 24, the auxiliary valve 25, the first valve 19 and the second valve 22 are electrically connected to a controller 27 that serves as a control unit.

As shown in Figs. 1 and 2, a battery 7 is mounted in the vehicle 1. The vehicle 1 is operable to run by electric power stored in the battery 7.

As shown in Fig. 1, as an example of the case where the vehicle air conditioner is not in use, a household power supply 8 is connected to the battery 7 of the vehicle 1 and the battery 7 is recharged while the vehicle 1 is parked in a home parking lot.

In a hot environment, a material that is suitable for storing heat in a negative energy state is used as the thermal storage medium 15. A circulator 9 is connected to the heat exchanger pipe 16 of the thermal storage unit 2 so as to cool water in the heat exchanger pipe 16.

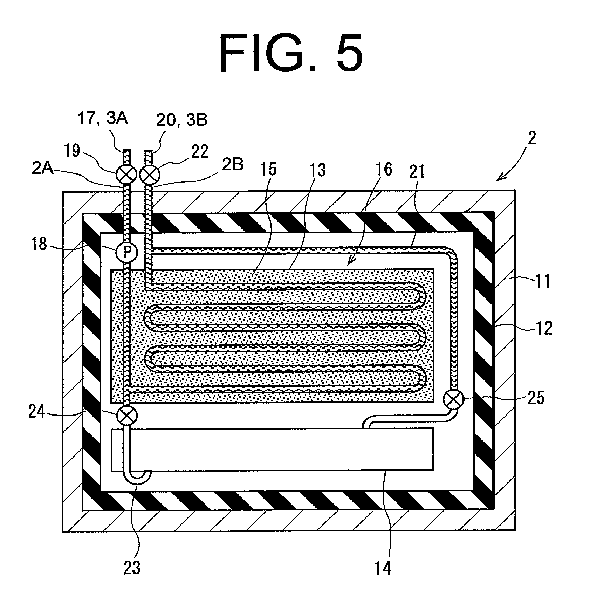

The heat exchanger pipe 16 connected to the circulator 9 is filled with water, as shown in Fig. 5, because keeping the water, which serves as a heat exchanger medium, at the same level as the thermal storage medium 15 enables rapid cooling. How the heat exchanger pipe 16 is filled with water will be described in later part hereof. Thus, the vehicle air conditioner enables water to be cooled at various places such as a home parking lot as shown in Fig. 1.

Water is cooled in accordance with its temperature. When the temperature of water is decreased to reach a predetermined level, the cooling of water is stopped. The thermal storage unit 2 is placed into a state where no water is present in the heat exchanger pipe 16 of the thermal storage tank 13 as shown in Fig. 3. How the thermal storage unit 2 is placed into such a state will be described in later part hereof.

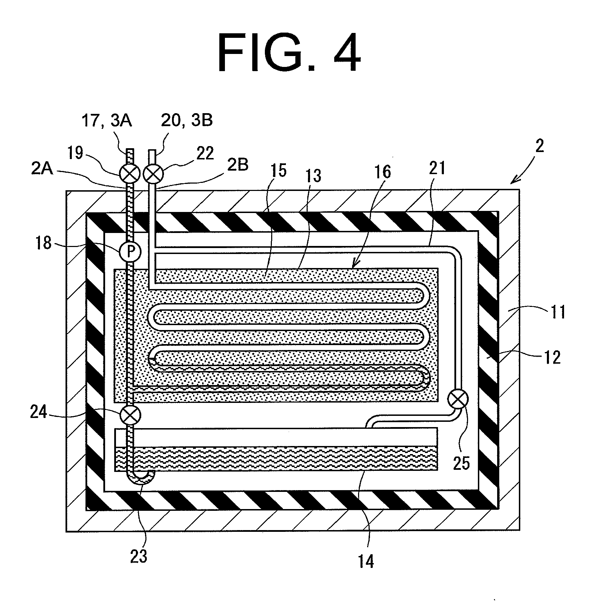

As shown in Fig. 2, the vehicle 1 is run as an example of the case where the vehicle air conditioner is in use. In this case, as shown in Fig. 3, the main valve 24, the auxiliary valve 25, the first valve 19 and the second valve 22 are opened under the control of the controller 27 and the pump 18 is operated. Therefore, as shown in Fig. 4, water in the reservoir tank 14 is moved into the heat exchanger pipe 16 via the outlet communication pipe 23 and the main valve 24. The pump 18 facilitates the operation of the thermal storage unit 2.

When water is completely moved out of the reservoir tank 14, the main valve 24 and the auxiliary valve 25 are closed and the thermal storage unit 2 is placed into a state as shown in Fig. 5. Then the pump 6 of Fig. 2 is activated to supply cooling water stored in the thermal storage unit 2 and having a negative energy state to the heat exchanger 4. When the blower 5 is operated, the interior of the vehicle 1 is cooled by the heat exchanger 4.

Let us suppose that the vehicle 1 has arrived at the destination and is parked there, but no power supply is available there for connection to the thermal storage unit 2 and the battery 7 of the vehicle 1. In such a case, the main valve 24, the auxiliary valve 25, the first valve 19 and the second valve 22 are opened under the control of the controller 27, as shown in Fig. 3, and the pump 18 is stopped. Therefore, water in the heat exchanger pipe 16 is moved by its own weight into the reservoir tank 14 via the main valve 24 and the outlet communication pipe 23, as shown in Fig. 4. When the water is moved completely out of the heat exchanger pipe 16, the main valve 24, the auxiliary valve 25, the first valve 19 and the second valve 22 are closed. The main valve 24 facilitates the operation of the thermal storage unit 2.

Thus, when the vehicle air conditioner is not in use, the reservoir tank 14 in the housing 11 collects cooling water flowing by its weight through the outlet port 2A and the inlet port 2B, so that air is present in the outlet port 2A and the inlet port 2B. Especially, in the vehicle air conditioner of the present embodiment, water in the thermal storage tank 13 is all moved from the heat exchanger pipe 16 into the reservoir tank 14. Since the cooling water is not directly exposed to the outside of the housing 11 but indirectly exposed via air, the cooling water hardly absorbs heat by virtue of the insulation by air. Thus, when the vehicle air conditioner is not in use, absorption of heat by the cooling water is prevented easily.

Additionally, the vehicle air conditioner according to the present embodiment is so constructed that the thermal storage tank 13 and the reservoir tank 14 are surrounded and thermally insulated from the outside by the housing 11 and the vacuum insulator 12, so that the thermal storage medium 15 and water hardly absorb heat.

Therefore, when the vehicle air conditioner is left unused for a long time, heat stored in a negative energy state in the thermal storage medium 15 hardly absorbs heat, so that the vehicle air conditioner can perform long-time cooling in the subsequent use.

In a cool environment, on the other hand, a material that is suitable for storing heat in a positive energy state is used as the thermal storage medium 15. When the vehicle air conditioner is not in use, the circulator 9 is connected to the heat exchanger pipe 16 of the thermal storage unit 2 so as to heat water in the heat exchanger pipe 16. Thus, heat in a positive energy state can be stored in the thermal storage medium 15 of the thermal storage unit 2.

When the vehicle air conditioner is in use, heat stored in a positive energy state in the thermal storage medium 15 of the thermal storage unit 2 is supplied to the heat exchanger 4 by water. Thus, the vehicle interior is heated by the heat exchanger 4.

When no power supply is available for connection to the thermal storage unit 2 and the battery 7 when the vehicle 1 has arrived at the destination, the main valve 24, the auxiliary valve 25, the first valve 19 and the second valve 22 are opened under the control of the controller 27, as shown in Fig. 3, and the pump 18 is stopped. Therefore, water in the heat exchanger pipe 16 is moved by its own weight into the reservoir tank 14 via the main valve 24 and the outlet communication pipe 23, as shown in Fig. 4. When the water is moved completely out of the heat exchanger pipe 16, the main valve 24, the auxiliary valve 25, the first valve 19 and the second valve 22 are closed.

Thus, when the vehicle air conditioner is not in use, the reservoir tank 14 in the housing 11 collects hot water flowing by its weight through the outlet port 2A and the inlet port 2B, so that air is present in the outlet port 2A and the inlet port 2B. Since the hot water is not directly exposed to the outside of the housing 11 but indirectly exposed via air, the hot water hardly releases heat by virtue of the insulation by air. Thus, when the vehicle air conditioner is not in use, heat release by the hot water is prevented easily.

Additionally, the vehicle air conditioner of the present embodiment is so constructed that the thermal storage tank 13 and the reservoir tank 14 are surrounded and thermally insulated from the outside by the housing 11 and the vacuum insulator 12, so that the thermal storage medium 15 and water hardly release heat.

Therefore, when the vehicle air conditioner is left unused for a long time, heat stored in a positive energy state in the thermal storage medium 15 hardly releases heat, so that the vehicle air conditioner can perform long-time heating in the subsequent use.

Further, because the vehicle air conditioner is constructed so that the reservoir tank 14 is located below the thermal storage tank 13, the vehicle air conditioner allows water in the thermal storage tank 13 to move by its own weight from the heat exchanger pipe 16 into the reservoir tank 14. Thus, the vehicle air conditioner may dispense with any pump for moving the water. Consequently, the thermal storage unit 2 and hence the vehicle air conditioner may be structurally simplified.

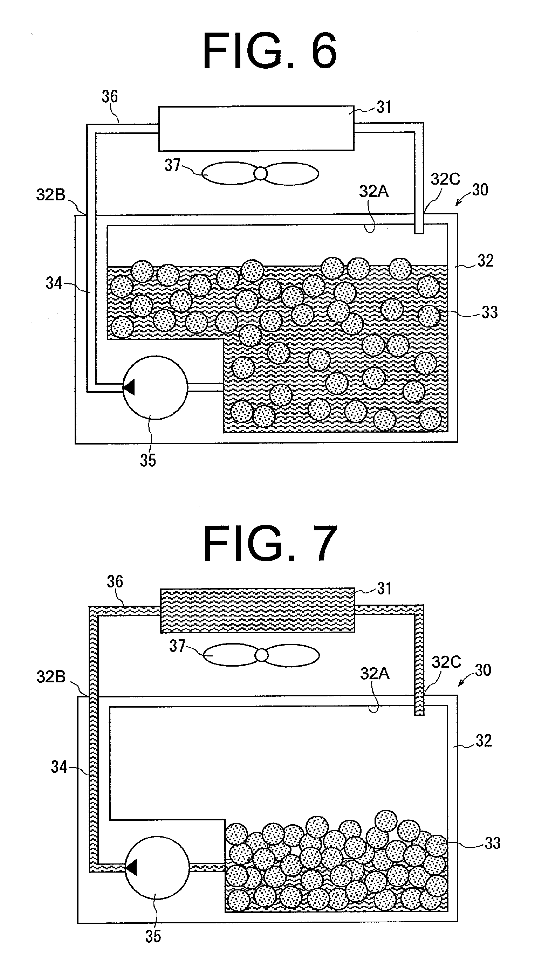

Now referring to Figs. 6 and 7, the vehicle air conditioner of the second embodiment includes a thermal storage unit 30 and a heat exchanger 31.

The thermal storage unit 30 has a housing 32 that also serves as a reservoir. The housing 32 is insulated appropriately as in the thermal storage unit 2 of the first embodiment. The housing 32 has therein a reservoir chamber 32A in which numerous thermal storage balls 33 that serve as a thermal storage are reserved.

The housing 32 has therein a flow path 34 that extends from a lower part of the reservoir chamber 32A. The housing 32 houses therein a pump 35 that is connected in the flow path 34. The flow path 34 and the pump 35 are insulated from the housing 32. The housing 32 has at the top thereof an outlet port 32B and an inlet port 32C that extend out of the housing 32. The flow path 34 is in communication with the outlet port 32B.

The outlet port 32B and the inlet port 32C are connected to each other by a conduit 36 at a position outside the housing 32. The heat exchanger 31 is mounted to the conduit 36. The heat exchanger 31 and the conduit 36 are located above the housing 32. The vehicle air conditioner includes a blower 37 for supplying air around the heat exchanger 31 to the vehicle interior.

Each thermal storage ball 33 is filled with a thermal storage medium. The thermal storage balls 33 reserved in the reservoir chamber 32A are freely movable. Antifreeze solution that serves as a heat exchange medium is reserved in the reservoir chamber 32A so as to surround the thermal storage balls 33. Thus, a heat exchange path is formed by the antifreeze solution around the thermal storage balls 33 while the antifreeze solution is reserved in the reservoir chamber 32A.

In a hot environment, thermal storage balls 33 are filled with a thermal storage medium that is suitable for storing heat in a negative energy state and such thermal storage balls 33 are previously cooled. Thus, the vehicle air conditioner can cool the air in the vehicle interior.

Namely, when the vehicle air conditioner is not in use, the pump 35 is stopped and antifreeze solution is reserved in the reservoir chamber 32A together with the thermal storage balls 33, as shown in Fig. 6. Thus, antifreeze solution is cooled by the thermal storage balls 33. In this state, antifreeze solution stays in the reservoir chamber 32A by its weight, so that air is present at the outlet port 32B and the inlet port 32C. Since antifreeze solution is not directly exposed to the outside of the housing 32 but indirectly exposed via air, the antifreeze solution hardly absorbs heat by virtue of the insulation by air.

When the vehicle air conditioner is in use, the pump 35 is driven and antifreeze solution is supplied into the heat exchanger 31, as shown in Fig. 7. Thus, the air in the vehicle interior is cooled by the blower 37. The pump 35 facilitates the operation of the thermal storage unit 30.

In a cool environment, thermal storage balls 33 are filled with a thermal storage medium that is suitable for storing heat in a positive energy state and such thermal storage balls 33 are previously heated. Thus, the vehicle air conditioner can heat the air in the vehicle interior.

Therefore, when the vehicle air conditioner is left unused for a long time, heat stored in a negative energy state in the thermal storage medium hardly absorbs heat, so that the vehicle air conditioner can perform long-time cooling in the subsequent use. Similarly, when the vehicle air conditioner is left unused for a long time, heat stored in a positive energy state in the thermal storage medium hardly releases heat, so that the vehicle air conditioner can perform long-time heating in the subsequent use.

The vehicle air conditioner of the second embodiment is formed such that the housing 32 insulates the thermal storage balls 33 and antifreeze solution from the outside, so that it is hard for the thermal storage medium and antifreeze solution to absorb or release heat. Thus, when the vehicle air conditioner is not in use, absorption of heat and heat release by the antifreeze solution are prevented easily. In the second embodiment wherein the housing 32 also serves as the reservoir, the thermal storage unit may be simplified in structure and, therefore, the vehicle air conditioner may be made simpler. The other effects of the second embodiment are the same as those of the first embodiment.

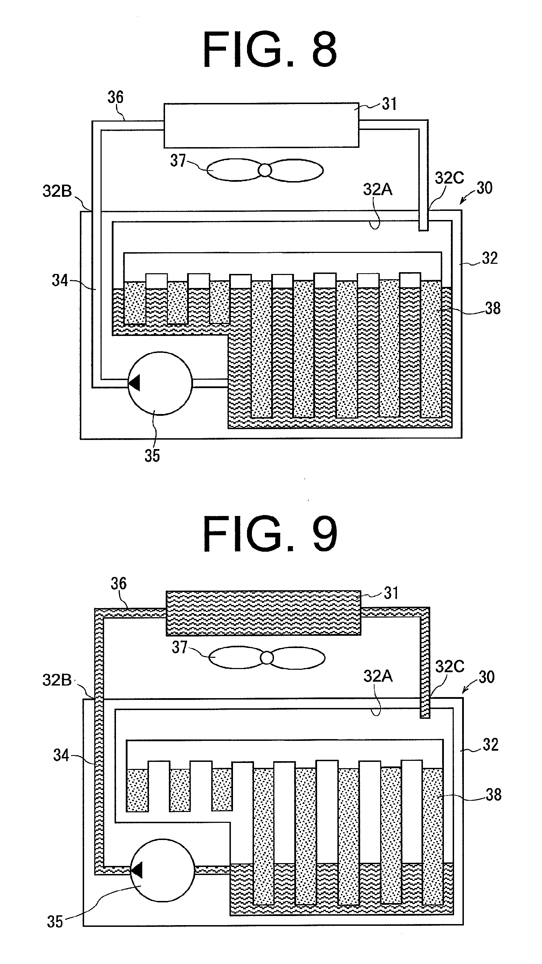

In the vehicle air conditioner of the third embodiment shown in Figs. 8 and 9, thermal storage fins 38 that serve as a thermal storage are filled with a thermal storage medium. The thermal storage fins 38 are fixedly mounted in the reservoir chamber 32A. The other structure of the third embodiment is substantially the same as that of the second embodiment. The vehicle air conditioner of the third embodiment offers substantially the same effects as that of the second embodiment.

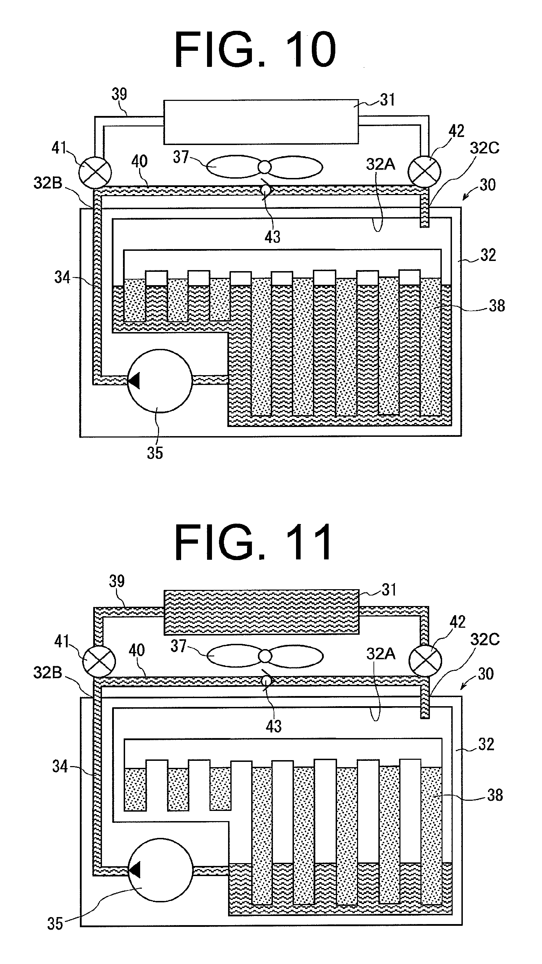

Referring to Figs. 10 and 11 showing the vehicle air conditioner of the fourth embodiment, the outlet port 32B and the inlet port 32C are connected by conduits 39 and 40 that are provided outside the housing 32 and the heat exchanger 31 is mounted to the conduit 39. As shown in the drawings, the conduits 39 and 40 and the heat exchanger 31 are located above the housing 32.

The conduits 39 and 40 are connected in parallel to each other and located downstream of the outlet port 32B and upstream of the inlet port 32C with respect to flowing direction of the antifreeze solution. A first valve 41 and a second valve 42 are connected in the conduit 39. The first valve 41 is operable to open and close the outlet port 32B and the second valve 42 is operable to open and close the inlet port 32C. Operation of the first valve 41 and the second valve 42 is controlled by the controller as a control unit as in the case of the first embodiment. A check valve 43 is connected in the conduit 40 for preventing shortcut of antifreeze solution from the outlet port 32B to the inlet port 32C. Insulator is wound around the conduits 39 and 40. The other structure of the fourth embodiment is substantially the same as that of the third embodiment.

When antifreeze solution in the reservoir chamber 32A is exchanged for antifreeze solution outside the reservoir chamber 32A with the air conditioner unused, the controller operates the pump 35 with the first and second valves 41 and 42 closed. Thus, antifreeze solution circulates only between the reservoir chamber 32A and the conduit 40, as shown in Fig. 10. Therefore, antifreeze solution is stirred in the reservoir chamber 32A and cooled or heated effectively.

When the vehicle air conditioner is in use, the controller operates the pump 35 with the first and second valves 41 and 42 opened. Thus, as shown in Fig. 11, antifreeze solution passes through the heat exchanger 31 thereby to cool or heat the vehicle interior.

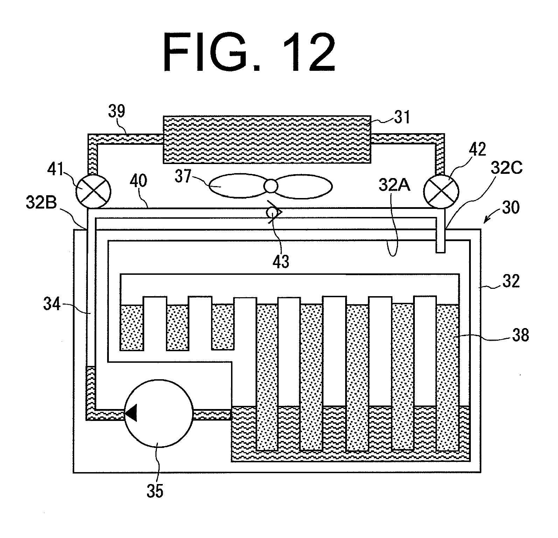

When the vehicle air conditioner is not in use, the controller stops the pump 35 and closes the first and second valves 41 and 42. Thus, antifreeze solution moves by its own weight from the conduit 40 into the reservoir chamber 32A, thus allowing air to be present at the outlet port 32B and the inlet port 32C as shown in Fig. 12.

The vehicle air conditioner of the fourth embodiment offers substantially the same effects as that of the third embodiment. Since the insulator is wound around the conduits 39 and 40, the antifreeze solution in the conduits 39 and 40 is prevented from absorbing or releasing heat.

The present invention has been described in the context of the above-described embodiments, but it is not limited to the illustrated embodiments. It is obvious that the invention may be practiced in various manners as exemplified below.

In the first embodiment, when the air conditioner is not in use, the main valve 24, the auxiliary valve 25, the first valve 19 and the second valve 22 are opened under the control of the controller 27 thereby allowing water in the heat exchanger pipe 16 to move by its own weight all into the reservoir tank 14. In a modification of the first embodiment, when the air conditioner is not in use, the first valve 19 and the second valve 22 are opened and the main valve 24 and the auxiliary valve 25 are closed under the control of the controller 27, so that water present in the outlet pipe 17 and the inlet pipe 21 between the first valve 19 and the vacuum insulator 12 and between the second valve 22 and the vacuum insulator 12, respectively, move into the reservoir tank 14 by its weight, thus allowing air to be present at the outlet port 2A and the inlet port 2B. In this case, the size of the reservoir tank can be reduced, so that the size of the vehicle air conditioner can also be reduced.

In the first embodiment, an electric heater or a hot-water heater that is operable to supply a heat exchange medium such as hot water into a pipe may be used for heating the thermal storage medium. A cold-water heater that is operable to supply a heat exchange medium such as cold water into a pipe may be used for cooling the thermal storage medium.

Paraffin, calcium chloride hydrate, sodium sulfate hydrate, sodium thiosulfate hydrate and sodium acetate hydrate may be used as a thermal storage medium for storing heat in a positive energy state. On the other hand, sodium polyacrylate called "refrigerant" or "cooling storage medium" may be used as a thermal storage medium for storing heat in a negative energy state.

Foamed styrene, glass wool, air space and vacuum space may be used for insulating the interior of the housing. However, the use of any vacuum insulator is preferable. The vacuum insulator may be formed by coating porous core material with laminate film and decompressing the interior of the core material under a pressure of 1 to 200 Pa. The porous core material includes foam such as urethane, powder material such as silica powder, and fibrous material such as glass wool. The vacuum insulator is about ten times higher in thermal insulation than foamed styrene having air space.

Heating and cooling means may be provided for heating or cooling water in the reservoir tank 14.

A thermal storage unit includes a thermal storage, a heat exchange path, a housing and a reservoir. The thermal storage is filled with a thermal storage medium. A heat exchange medium flows through the heat exchange path. The housing surrounds and thermally insulates the thermal storage from the outside. The housing has an inlet port and an outlet port for communicating with the heat exchange path and a conduit which is located outside the housing and connected to the inlet port and the outlet port. The reservoir is located in the housing for reserving the heat exchange medium. When the thermal storage unit is not in use, the reservoir collects the heat exchange medium flowing by weight thereof through the inlet port and the outlet port, thereby allowing air to be present at the inlet port and the outlet port.

## Claims

1. A thermal storage unit (2, 30) comprising:
a thermal storage (13, 33, 38) filled with a thermal storage medium (15);
a heat exchange path (16) through which a heat exchange medium flows for exchanging heat between the thermal storage medium (15) of the thermal storage (13, 33, 38) and the heat exchange medium; and
a housing (11, 32) surrounding and thermally insulating the thermal storage (13, 33, 38) from the outside, wherein the housing (11, 32) has an inlet port (2B, 32C) and an outlet port (2A, 32B) for communicating with the heat exchange path (16) and a conduit (3A, 3B, 36, 39, 40) which is located outside the housing (11, 32) and connected to the inlet port (2B, 32C) and the outlet port (2A, 32B), wherein the inlet port (2B, 32C) and the outlet port (2A, 32B) allow the heat exchange medium to flow into and out of the housing (11, 32), respectively,
**characterized in that** the thermal storage unit (2, 30) has a reservoir (14) located in the housing (11, 32) for reserving the heat exchange medium, wherein when the thermal storage unit (2, 30) is not in use, the reservoir (14) collects the heat exchange medium flowing by weight thereof through the inlet port (2B, 32C) and the outlet port (2A, 32B), thereby allowing air to be present at the inlet port (2B, 32C) and the outlet port (2A, 32B).

2. The thermal storage unit (2) according to claim 1, **characterized in that** the reservoir (14) is located below the thermal storage (13), wherein the thermal storage (13) is located below the inlet port (2B) and the outlet port (2A).

3. The thermal storage unit (2) according to claim 2, **characterized in that** a pump (18) is further provided for moving the heat exchange medium into the housing (11) through the inlet port (2B) while moving the heat exchange medium out of the housing (11) through the outlet port (2A).

4. The thermal storage unit (2) according to claim 3, **characterized in that** a first valve (19) is connected in the conduit (3A) for opening and closing the outlet port (2A), a second valve (22) is connected in the conduit (3B) for opening and closing the inlet port (2B), and a control unit (27) is provided for controlling the first valve (19) and the second valve (22), wherein when the thermal storage unit (2) is not in use, the control unit (27) controls the first valve (19) and the second valve (22) so that air is present at the outlet port (2A) and the inlet port (2B).

5. The thermal storage unit (2) according to claim 4, **characterized in that** a main valve (24) is located between the heat exchange path (16) and the reservoir (14) for allowing and shutting off communication therebetween, wherein when the thermal storage unit (2) is not in use, the control unit (27) further controls the main valve (24) to allow the communication so that the reservoir (14) collects the heat exchange medium.

6. The thermal storage unit (30) according to claim 1, **characterized in that** the housing (32) serves as the reservoir (32A) which accommodates the thermal storage (33, 38), wherein the heat exchange path is formed by the heat exchange medium around the thermal storage (33, 38) while the heat exchange medium is reserved in the reservoir (32A).

7. The thermal storage unit (30) according to claim 6, **characterized in that** a pump (35) is further provided for moving the heat exchange medium into the housing (32) through the inlet port (32C) while moving the heat exchange medium out of the housing (32) through the outlet port (32B).

8. The thermal storage unit (30) according to claim 7, **characterized in that** the thermal storage (33, 38) in the reservoir (14) is formed by freely movable and numerous thermal storage balls (33) each of which is filled with the thermal storage medium (15).

9. The thermal storage unit (30) according to claim 7, **characterized in that** the thermal storage (33, 38) is formed by a thermal storage fin (38) which is fixed in the reservoir (14) and filled with the thermal storage medium (15).

10. The thermal storage unit (30) according to claim 9, **characterized in that** a first valve (41) is connected in the conduit (39) for opening and closing the outlet port (32B), a second valve (42) is connected in the conduit (39) for opening and closing the inlet port (32C), and a control unit (27) is provided for controlling the first valve (41) and the second valve (42), wherein when the thermal storage unit (30) is not in use, the control unit (27) controls the first valve (41) and the second valve (42) so that air is present at the outlet port (32B) and the inlet port (32C).

11. The thermal storage unit (2, 30) according to any one of claims 1 through 10, **characterized in that** when the thermal storage unit (2, 30) is not in use, the reservoir (14) collects all the heat exchange medium in the heat exchange path (16).

12. An air conditioner for a vehicle (1) comprising:
a heat exchanger (4, 31) mounted to the conduit (3A, 3B), wherein air around the heat exchanger (4, 31) is supplied into interior of the vehicle (1),
**characterized in that** the thermal storage unit (2, 30) according to any one of claims 1 through 11 is provided.
